(19) Europäisches Patentamt
European Patent Office
Office européen des brevets

(11) **EP 3 873 861 B1**

(12) **EUROPEAN PATENT SPECIFICATION**

(45) Date of publication and mention
of the grant of the patent:
**09.11.2022 Bulletin 2022/45**

(21) Application number: **19779917.4**

(22) Date of filing: **04.10.2019**

(51) International Patent Classification (IPC):
*C03C 17/25* (2006.01)   *C03C 17/36* (2006.01)
*C03C 17/42* (2006.01)

(52) Cooperative Patent Classification (CPC):
**C03C 17/42; C03C 17/256; C03C 17/366;
C03C 17/3681;** C03C 2217/212; C03C 2217/213;
C03C 2217/22; C03C 2217/228; C03C 2217/23;
C03C 2217/425; C03C 2217/78; C03C 2218/113;
C03C 2218/32

(86) International application number:
**PCT/EP2019/076952**

(87) International publication number:
**WO 2020/088881 (07.05.2020 Gazette 2020/19)**

(54) **COATED SUBSTRATE**

BESCHICHTETES SUBSTRAT

SUBSTRAT REVÊTU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2018 EP 18203137**

(43) Date of publication of application:
**08.09.2021 Bulletin 2021/36**

(73) Proprietors:
• **AGC Glass Europe
1348 Louvain-La-Neuve (BE)**
• **AGC Inc.
Tokyo 100-8405 (JP)**
• **AGC Flat Glass North America, Inc.
Alpharetta, GA 30022-1167 (US)**
• **AGC Vidros do Brasil Ltda
CEP 12523-671 Guaratinguetá São Paulo (BR)**

(72) Inventors:
• **BOSGAERD, Eric
1474 Ways (BE)**
• **PEYROUX, Eugénie
1653 Dworp (BE)**
• **PIERRE, David
6041 Gosselies (BE)**

(74) Representative: **AGC Glass Europe
Technovation Centre
Intellectual Property Department
Rue Louis Blériot 12
6041 Gosselies (BE)**

(56) References cited:
EP-A1- 2 404 882       WO-A1-2017/072259
WO-A1-2018/202595    US-A1- 2008 268 260

**Description**

**Technical field of the invention**

The invention relates to a coated substrate provided with a soft coating such as a solar control or an insulating low-E coating with an increased mechanical, chemical and corrosion resistance thanks to the presence above the soft coating of a sol-gel coating and a protective coating comprising an organic polymer. The invention also relates to the process for making such a coated substrate and to a densified coated substrate obtained by the densification of the sol-gel coating and thermal degradation of the protective coating. Particularly, the invention relates to a coated glass substrate that may be heat treated and to multiple glazing and laminated glazing comprising the densified coated glass substrate.

**Background of the invention**

A large part of soft coatings such as solar control or insulating low-E coatings present a low emissivity and are used in glazing for their IR reflecting ability, allowing a precise energy control of the glazing, thereby reducing heat loss and/or avoiding over-heating of a glazed structure. Unfortunately, the limited mechanical, chemical and corrosion resistance of most soft coatings limits their use. Indeed, such coatings can be easily damaged by exposure to the environment during their production or during their lifetime. Mechanical actions such as contact or friction with other materials or objects can result in scratches or mars. Modifications of the chemical environment (humidity, temperature...) or contact with chemicals like detergent or everyday life products leads to a degradation of the soft coating surface. The result of such deteriorations could be both aesthetic and functional. This is particularly true for soft coatings that rely on metal-based infrared reflecting layers. Even if some soft coatings, without metal-based infrared reflecting layers can be used on exterior faces of glazing, their durability does not reach that of hard coatings produced by chemical vapor deposition (CVD).

During the production of coatings on substrates like glass or polymer sheets, the coated sheets are often scratched due to one or more of: (a) rubbing up against other sheets or the like during shipment; (b) pliers used by glass handlers during and/or proximate cutting or edge seaming steps; (c) abrasion caused by gloves worn by glass handlers; (d) brushes during washing step; and (e) other types of rubbing/abrasion caused during any step at fabricator premises. Additionally, corrosion is also a significant cause of damage of glass sheets and is often caused by high humidity conditions, acid rain, and/or other materials which tend to collect on the coated articles during transport, storage and/or handling.

For glass sheets, while the aforesaid types of damage often occur prior to heat treatment (e.g., tempering), the tempering magnifies such damage. For example, a minor bit of corrosion which was caused pre-tempering can lead to a significant blemish upon heat treatment which causes the coated sheet to be scrapped.

Many applications or markets are demanding soft coatings, particularly solar control or insulating low-E coatings for their opto-energetic properties and their ability to block a portion of the IR spectrum. However, the limited mechanical, chemical and/or corrosion resistance of soft coatings limits their use in simple glazing, for interior or exterior use, or in the case of multiple glazing their use in external positions, i.e. on the external faces of the glazing.

A known method to obtain a glazing with a protected low-E coating is to make use of energy saving window films such as those commercialized by Nitto under the names Penjerex® PX-7060S or Penjerex® PX-8080. These adhesive films contain a low-E coating protected by a polyester film. However, for durability reasons, such films can only be used on the face of the glazing in contact with the interior of a building, they are not heat treatable and oblige the windows maker or the end user to install them on site.

Deposition of a sol-gel coating on a low-E undercoat on glass is disclosed in US20070243391. The sol-gel coating aims at efficiently blocking ultraviolet (UV) radiations and comprises very high amounts of cerium oxide as UV blocker. US20070243391 is silent about the mechanical, chemical and corrosion protection of the low-E coating and the impact of this sol-gel coating on the emissivity of the low-E coating.

EP 2 404 882 A1 and US 2008/268260 A1 likewise disclose UV-blocking sol-gel layers with high cerium oxide content. WO 2017/072259 A1 discloses cerium doped silica sol-gel layers, brought over low-e coated glass substrates.

Deposition of a protective layer on a functional coating is disclosed in US20160194516. This protective layer is based on the (meth)acrylates chemistry and protects the functional coating during the processing of the glass until tempering or annealing. The protective layer burns during tempering or annealing and consequently the functional coating resistance after tempering or annealing is not improved in comparison to a situation where no protective layer is used.

Thus, there is a need to develop coated substrates, particularly glass substrates provided with a soft coating having improved mechanical, chemical and corrosion resistance both before and after a heat treatment while not significantly impacting the emissivity and/or the aesthetics of the coating.

## Summary of the invention

Against this background we now provide a coated substrate comprising:

- a substrate,

- a soft coating comprising one or more layers deposited by physical vapor deposition provided on at least a part of at least one face of the substrate,

- a sol-gel coating provided on at least a part of said face above the soft coating comprising:

  - silicon oxide

  - at least one of titanium oxide or zirconium oxide,

  - cerium oxide in a theoretical weight ratio of cerium oxide/silicon oxide ranging from o to 0.03

- a protective coating comprising at least one organic polymer provided on at least a part of said face above the sol-gel coating.

One objective of the invention is to provide in at least one of its embodiments a coated substrate comprising a soft coating having improved mechanical, chemical and corrosion resistance before heat treatment thanks to the presence of the protective coating and the sol-gel coating, and a densified coated substrate having improved mechanical, chemical and corrosion resistance after heat treatment thanks to the presence of the densified sol-gel coating.

Another objective of the invention is to provide in at least one of its embodiments a densified coated substrate comprising a solar control or insulating low-E coating deposited by Physical Vapor Deposition (PVD) and having improved mechanical, chemical and corrosion resistance thanks to the presence of the densified sol-gel coating while the emissivity and/or the aesthetics of the solar control or insulating low-E coating is not significantly impacted.

It is yet another objective of the invention in at least one of its embodiments to provide a coated substrate or a densified coated substrate that can be exposed to the environment, i.e. that can be applied on faces of the substrate in contact with the environment. The coated substrate or densified coated substrate can more particularly be exposed to the environment of the inside of a building.

It is still another objective of the invention in at least one of its embodiments to provide a coated glass substrate that is suitable to be heat treated or suitable to be tempered.

It is yet another objective of the invention in at least one of its embodiments to provide a coated substrate wherein the soft coating is already protected when provided to the customer or end user who has no additional protection step to perform.

It is another objective of the present invention to provide in at least one of its embodiments a densified coated glass substrate for saving energy in applications such as buildings, home appliances, transportation (automobile, bus, boat, train, tramway and the like) or greenhouses.

The present invention also provides a process for making a coated substrate and for making a densified coated substrate as well as the densified coated substrate per se.

The invention further provides glazing units comprising the densified coated substrate wherein the substrate is glass, and particularly single or multiple glazing units.

It is an objective of the present invention to provide in at least one of its embodiments glazing units allowing the face of the densified coated glass substrate covered by the soft coating to face the outside of the unit, i.e. to be in contact with the exterior of the glazing, more particularly when the glazing is used inside of a building.

## Description of the invention

In a first aspect of the invention, there is provided a coated substrate comprising:

- a substrate,

- a soft coating comprising one or more layers deposited by physical vapor deposition provided on at least a part of at least one face of the substrate,

- a sol-gel coating provided on at least a part of said face above the soft coating comprising:

- silicon oxide

- at least one of titanium oxide or zirconium oxide,

- cerium oxide in a theoretical weight ratio of cerium oxide/silicon oxide ranging from o to 0.03

• a protective coating comprising at least one organic polymer provided on at least a part of said face above the sol-gel coating.

The substrate according to the invention can be any substrate such as for instance glass, glass-ceramic, ceramic, steel, metal and transparent polymers such as polycarbonate (PC), polyethylene terephthalate (PET), polystyrene (PS), polyvinyl chloride (PVC), polymethyl methacrylate (PMMA). The substrate according to the invention may be flat or curved/bended. Suitable substrates according to the invention preferably can withstand a heat treatment at at least 300°C, preferably at at least 400°C. The substrate is preferably glass, glass-ceramic, ceramic, steel, metal. It is more preferably a glass substrate, most preferably a glass sheet. According to an embodiment, the glass sheet is a float glass sheet. The term "float glass sheet" is understood to mean a glass sheet formed by the float method, which consists in pouring the molten glass onto a bath of molten tin, under reducing conditions. A float glass sheet comprises, in a known way, a "air face" and a "tin face", the last one being a face enriched in tin in the body of the glass close to the surface of the sheet. The term "enrichment in tin" is understood to mean an increase in the concentration of tin with respect to the composition of the glass at the core, which may or may not be substantially zero (devoid of tin). Therefore, a float glass sheet can be easily distinguished from sheets obtained by other glassmaking methods, in particular by the tin oxide content which may be measured, for example, by electronic microprobe to a depth of ~ 10 microns. In many cases and as illustration, this content lies between 1 and 5 wt%, integrated over the first 10 microns starting from the surface.

Alternatively, according to another embodiment, the glass sheet is a cast or drawn glass sheet.

The glass sheet according to the invention is made of glass whose matrix composition is not particularly limited and may thus belong to different categories. The glass may be a soda-lime-silicate glass, an alumino-silicate glass, an alkali-free glass, a boro-silicate glass, etc. It may be a clear, extra-clear/low-iron or coloured glass sheet. Preferably, the glass sheet of the invention is made of a soda-lime glass or an alumino-silicate glass. Non-limiting examples of glass sheets are Planibel® Clear, Linea Azzura®, Dragontrail®, Tirex®, Falcon®, Clearvision®, Clearlite®.

The glass sheet of the invention can be of any desired dimensions, such as length, width, shape and/or thickness. In one embodiment, the glass sheet of the invention may have a thickness of from 0.1 to 25 mm.

For the purpose of the present invention a soft coating is a coating comprising one or more layers deposited by physical vapor deposition (PVD) in particular by magnetron sputtering. In particular, a soft coating may comprise one or more metal based infrared reflecting layers that are typically surrounded by two or more dielectric layers. The metal based infrared reflecting layer is most often based on silver but may also be based on metals such as for example nickel, chromium, niobium, tungsten, zirconium, titanium stainless steel or mixtures thereof. The dielectric layers may comprise one or more metal oxides or metal nitrides or metal oxynitrides or metal carbides or diamond-like carbon layers. In a typical embodiment of the present invention the soft coating comprises p functional layer(s) reflecting infrared radiation and p+1 dielectric layers, with p≥1, each functional layer being surrounded by dielectric layers. In certain embodiments, a soft coating may also be a coating deposited by physical vapor deposition (PVD) in particular by magnetron sputtering which is devoid of any metallic layer and comprise only one or more layers of one or more metal oxides or metal nitrides or metal oxynitrides or metal carbides or diamond-like carbon or transparent conductive oxides.

Soft coatings produced by PVD, in particular comprising metallic functional layers, have generally a limited mechanical, chemical and corrosion resistance hence limiting their possible uses in contact with the environment.

The soft coating may in particular be a solar control or insulating low-E coating. For example, and without limitation, such solar control or insulating low-E coatings may be single silver, double silver or triple silver coating stacks, or any of the soft coatings in any of the following WO2005012200, WO2006122900, WO2007138097, WO2011147875, WO2011147864, WO2013079400, WO2014191472, WO2014191474, WO2014191484, all of which are hereby incorporated by reference.

Suitable soft coatings in the frame of the present invention are for instance Sunlux or Stopsol commercialized by Asahi Glass Company. Examples of solar control or insulating low-E coating suitable for the invention are Silver Smart (such as 30/51/69), Planibel AS, iplustop (such as 1.1T, 1.0T, Stopray (Vision 50, 60, 72, 61, 41, and 40 and ultra 50 and 60 )) and Energy N also commercialized by Asahi Glass Company.

The soft coating of the invention is provided on at least a part of at least one face of the substrate. It can be provided on a part of said face or substantially on the entire said face. It can be provided on a part of the face as it is the case for the so called edge deleted glass sheet. In this case, the soft coating is removed on the periphery of the face of the coated glass sheet. It can alternatively be provided substantially on the entire said face. By substantially on an entire entity (here the face) is meant that at least 90% of the entity is covered, preferably at least 95%, more preferably at least 97%, most preferably 100% of the entity is covered. The soft coating can be provided on anyone of the faces of the substrate or on both faces.

By sol-gel coating is here meant the coating obtained after application and drying of the sol-gel solution as will be detailed later in the process description.

The sol-gel coating is provided on at least a part of the face of the substrate provided with the soft coating and above the soft coating. Both the soft coating and the sol-gel coating can cover substantially the entire face of the substrate or they can both cover the same part of the face or the soft coating can cover a part of the face and the sol-gel coating can cover a larger part or substantially the whole face of the substrate. The sol-gel coating is provided above the soft coating and it can either be in direct contact with the soft coating or separated of the soft coating by one or more intermediate layers. The sol-gel coating is preferably provided in direct contact with the soft coating, i.e. no intermediate layer is present between the soft coating and the sol-gel coating. It is more preferably provided in direct contact with the soft coating and at least substantially on the entire soft coating.

The thickness of the sol-gel coating typically ranges from 70 to 1000 nm. The thickness is preferably at least 150 nm and preferably at most 700 nm. When the thickness is too low, the protective effect of the coating is less efficient and when the thickness is too high, the risk to create cracks into the coating during a densification step is high due to the shrinkage of the sol-gel.

The sol-gel coating comprises silicon oxide, at least one of titanium oxide or zirconium oxide, optionally cerium oxide in a theoretical weight ratio of cerium oxide/silicone oxide ranging from o to 0.03. The claimed range also comprises the limits of the range.

The theoretical weight of a metal or metalloid oxide is calculated according to the following formula:

$$\text{Theoretical weight}_{\text{oxide}} = n_{\text{oxide precursor}} \cdot M_{\text{eq oxide}}$$

where,

$n_{\text{oxide precursor}}$ is the total number of metal or metalloid equivalents in the precursor(s) of a given metal or metalloid oxide present in the sol-gel solution. Equivalent has here its general meaning , i.e. number of moles of precursor multiplied by the number of metal or metalloid element(s) in the precursor. Depending on the sol-gel solution, there might be one or more precursors of a given metal or metalloid oxide. If there is a single precursor, n is the number of metal or metalloid equivalents of that given precursor. If there are for instance two precursors, n=n1+n2, where n1 is the number of metal or metalloid equivalents of the first precursor and n2 is the number of metal or metalloid equivalents of the second precursor,

$M_{\text{eq oxide}}$ is the metal or metalloid equivalent weight of the metal or metalloid oxide expressed in g/eq. The metal or metalloid equivalent weight is the molar weight of the metal or metalloid oxide divided by the number of metal or metalloid element(s) in the metal or metalloid oxide (for $Bi2O_3$, the metal equivalent weight is the molar weight divided by 2).

The theoretical weight ratio of cerium oxide/silicone oxide is preferably at most 0.02, more preferably at most 0.01.

The optional presence of cerium oxide as doping agent in low amounts is advantageous as it does not impact significantly the color, it has particularly a low yellowing effect.

In an embodiment, the sum of the theoretical weight ratios of titanium oxide/silicon oxide and zirconium oxide/silicon oxide in the sol-gel coating ranges from 0.01 to 6. This embodiment covers the case where zirconium oxide is present and titanium oxide is absent, the case where titanium oxide is present and zirconium oxide is absent and the case where they are both present with the proviso that the sum ranges from 0.01 to 6. The sum preferably is at most 5, more preferably at most 4.5, most preferably at most 4. A sum of titanium oxide and zirconium oxide in said ranges advantageously allows limiting the refractive index of the densified sol-gel coating and hence limiting interferences between the densified sol-gel coating and the soft coating.

In another embodiment, the sol-gel coating preferably comprises silicon oxide, titanium oxide, zirconium oxide, cerium oxide in theoretical weight ratios of:

- titanium oxide /silicon oxide ranging from 0.01 to 3,

- zirconium oxide /silicon oxide ranging from 0.01 to 3,

- cerium oxide / silicon oxide ranging from o to 0.03.

The theoretical weight ratio titanium oxide /silicon oxide ranges from 0.01 to 3. The ratio is preferably at least 0.05, more preferably at least 0.1, most preferably at least 0.2. The ratio is preferably at most 2.5, more preferably at most 2, most preferably at most 1.5.

These amounts of titanium oxide advantageously allow improving the chemical and corrosion resistance of the sol-gel coatings.

The theoretical weight ratio zirconium oxide /silicon oxide ranges from 0.01 to 3. The ratio is preferably at least 0.05, more preferably at least 0.1, most preferably at least 0.2. The ratio is preferably at most 2.5, more preferably at most 2, most preferably at most 1.5.

Zirconium oxide participates to the improvement of the mechanical resistance of the sol-gel coating such as the scratch resistance and to the improvement of the humidity resistance. It improves particularly the humidity resistance. Amounts below the lower limit of the range produce no significant effect. Amounts above the upper limit of the range will consequently limit the amounts of silicon oxide and/or titanium oxide in the dried or densified sol-gel coating. Too low amounts of silicon oxide might be detrimental to the adhesion, while too low amounts of titanium oxide might be detrimental to chemical resistance.

The sol-gel coating may optionally also comprise bismuth oxide. In this case, the theoretical weight ratio bismuth oxide /silicon oxide ranges from o to 0.03. The ratio is preferably at most 0.02, more preferably at most 0.01.

Other metal or metalloid oxides such as of $Al_2O_3$, $Fe_2O_3$, $SnO_2$, $TaO_2$ or any mixtures of those may be used. They may be present in a total amount of maximum 3 wt % of the dried coating composition. By wt% (weight percent) is meant the number of gram of said precursors per 100g of dried sol gel coating.

The sol-gel coating preferably comprises a mixture of silicon oxide, titanium oxide, zirconium oxide, cerium oxide wherein said oxides sum up to 100% of the metal and metalloid oxides of the sol-gel coating.

The protective coating is provided on at least a part of the face of the substrate provided with the soft coating and the sol-gel coating and above the sol-gel coating. It preferably covers the entire sol-gel coating and the entire soft coating or substantially the whole face of the substrate. The protective coating is provided above the sol-gel coating and it can either be in direct contact with the sol-gel coating or separated of the sol-gel coating by one or more intermediate layers. The protective coating is preferably provided in direct contact with the sol-gel coating, i.e. no intermediate layer is present between the sol-gel coating and the protective coating.

The chemical nature, the density, the thickness of the protective coating contribute to obtain effective protection against mechanical and chemical attacks.

The thickness of the protective coating typically ranges from 500 nm to 100 micrometers. The thickness is preferably at least 1 micrometer and more preferably at least 2 micrometers, most preferably at least 10 micrometers. It is preferably at most 50 micrometers, more preferably at most 30 micrometers. When the thickness is too low, the effect of the coating in terms of mechanical, chemical and corrosion protection is less efficient. When the thickness is too high, thermal degradation of the protective coating may lead to deterioration of the sol-gel coating.

The protective coating is preferably not soluble in water and resistant to hydrolysis. Protective coatings that are soluble in water or sensitive to hydrolysis provide a limited level of protection against wet corrosion and when the substrate is put in contact with water.

The protective coating may be a continuous or a non-continuous (for instance "islanded") coating. While a non-continuous coating may provide adequate protection against mechanical damage, it is less effective against humidity and chemicals protection. The protective coating is hence advantageously a continuous coating.

The protective coating comprises at least one organic polymer. For the purpose of the invention, by polymer is meant a chemical compound having a structure comprising covalently bonded repetitive units. An organic polymer is a carbon-containing polymer. The carbon may be present in the polymer main backbone and/or in side groups. The organic polymers maybe natural polymers like cellulose or synthetic polymers which are not present in nature and are industrially produced. The organic polymers suitable for the invention are preferably synthetic polymers. The organic synthetic polymers of the invention may be linear, branched or crosslinked.

The organic polymer preferably comprises at least 3 covalently bonded repetitive units and preferably more than 3 repetitive units. It is characterized by a number average molecular weight, a weight average molecular weight and a molecular weight distribution, which are known parameters of a polymer that are for instance determined by gel permeation chromatography (GPC) making use of a polystyrene calibration. The analysis conditions such as the solvent, the set of columns, the temperature, the detection system have to be adapted to the type of polymer to be analysed.

The organic polymers suitable for the invention have typically a weight average molecular weight ranging from 200 to 1000000 Daltons. They have preferably a weight average molecular weight of at least 500 Daltons, more preferably of at least 2000 Daltons, most preferably of at least 5000 Daltons. They have preferably a weight average molecular weight of at most 700000 Daltons, more preferably of at most 500000 Daltons, most preferably of at most 300000 Daltons.

The organic polymers suitable for the invention have typically a glass transition temperature (Tg) ranging from 20°C to 400°C. They have preferably a Tg of at least 25°C, more preferably of at least 35°C, most preferably of 50°C. They have preferably a Tg of at most 350°C, more preferably of at most 300°C, most preferably a Tg of at most 250°C. The glass transition temperature is a known parameter of a polymer and is measured by differential scanning calorimetry according to ISO 11357-2 Part 2.

Without wishing to be bound by any theory, it is believed that the organic polymer needs to have a weight average molecular weight of at least 200 Daltons and a Tg of at least 25°C to bring protective performances. Hence particularly preferred organic polymers are synthetic polymers having a weight average molecular weight of at least 200 Daltons, preferably at least 500 Daltons, more preferably of at least 2000 Daltons, most preferably of at least 5000 Daltons and a Tg of at least 25°C. Most preferred organic polymers are additionally not soluble in water and resistant to hydrolysis.

Non exhaustive examples of organic polymers suitable for the present invention are acrylic polymers, polyacrylamides, polycarbonates, polyurethanes, polyesters, polyolefins, polydienes, polyamides, polyimides, polyethers, silicones, polyalkylene oxides. Copolymers are also suitable organic polymers. Examples are vinyl copolymers obtained from at least two different vinyl monomers such as acrylic copolymers, styrene-acrylic copolymers, ethylenevinyl acetate copolymer, stryrene-acrylonitrile copolymer, stryrene-butadiene-styrene copolymer and the like. Mixtures or several of these organic polymers may also be used.

Other organic polymers suitable for the purpose of the present invention are those obtained by the crosslinking of polymer precursors. By crosslinking is meant the formation of a network of polymer chains upon exposure of the polymer precursors to ultraviolet or electron beam, to humidity or to a crosslinking agent. Widely used polymer precursors of this kind are (meth)acrylate compounds. The term (meth)acrylate is understood to mean an acrylate or a methacrylate. The expression (meth)acrylate compounds is understood to mean the esters of acrylic or methacrylic acid comprising at least on acryloyl ($CH_2$-CH-CO-) or methacryloyl group ($CH_2$-CH($CH$)$_3$-CO-). These (meth)acrylate compounds can be monomers, oligomers, prepolymers and mixtures thereof. Besides the (meth)acrylates chemistry, other typical chemistries used in that field are the urethane chemistry or the epoxy chemistry.

The presence of the sol-gel coating and of the protective coating above the soft coating advantageously brings a protection of the soft coating against mechanical, chemical and corrosion attacks. In other words, the coated substrate according to the invention comprises a soft coating having improved mechanical, chemical and corrosion resistance thanks to the presence of the sol-gel and protective coatings.

It is another object of the invention to provide a process for making a coated substrate according to the invention comprising the steps of:

> a) forming a soft coating comprising one or more layers deposited by physical vapor deposition on at least a part of at least one face of the substrate,
> b) forming a sol-gel coating on at least a part of said face above the soft coating,
> c) forming a protective coating comprising at least one organic polymer on at least a part of said face above the sol-gel coating.

All features and embodiments described above in relation with namely the substrate, the soft coating, the sol-gel coating apply to the process as well.

The process comprises the step of forming a soft coating. The soft coating is formed on the substrate by physical vapor deposition. It may be applied for instance by sputtering by the well-known method of magnetron sputtering.

The soft coating is formed on at least a part of at least one face of the substrate. It can be provided on a part of said face or substantially on the entire said face. It can be provided on a part of the face as it is the case for a so called edge deleted glass sheet. In this case, the soft coating is removed on the periphery of the face of the coated glass. It can alternatively be provided substantially on the entire said face. The soft coating can be provided on anyone of the faces of the substrate or on both faces.

The process for making a coated substrate according to the invention comprises a subsequent step of forming a sol-gel coating on at least a part of the face of the substrate provided with the soft coating and above the soft coating.

The formation of the sol-gel coating comprises the sub-steps of preparing and applying a sol-gel solution on at least a part of the face of the substrate provided with the soft coating and above the soft coating and drying it.

The sol-gel solution is prepared according to known methods and comprises:

- at least one silicon oxide precursor,

- at least one oxide precursor of titanium or zirconium,

- optionally at least one cerium oxide precrusor,

- a solvent or a mixture of solvents,

- water.

Suitable silicon oxide precursors are silicon alkoxydes and silane halides. For instance tetraethylorthosilicate (TEOS), methyltriethoxysilane (MTES), methyltrimethoxysilane (MTMS), (3-aminopropyl)-triethoxysilane (APTES), (3-Glycidyloxypropyl)trimethoxysilane (GPTMS) and the like. Combinations of different silicon oxide precursors can be used.

Suitable titanium oxide precursors are for instance titanium (IV) isopropoxide, titanium (IV) butoxide or titanium (IV) tert-butoxide. Preferred are titanium (IV) isopropoxide and titanium (IV) butoxide. Combinations of such precursors can be used.

For the purpose of the present invention, suitable zirconium oxide precursors are for instance zirconium alkoxides such as zirconium (IV) butoxide, zirconium (IV) isopropoxide, zirconium (IV) tert-butoxide), or under the form of zirconium (IV) salts such as zirconium(IV) acetylacetonate. Preferred ones are zirconium (IV) butoxide or zirconium (IV) isopropoxide. Combinations of such precursors can be used.

Suitable precursors of cerium oxides for the invention are cerium salts or organometallic derivatives like metal alkoxides. Some examples are cerium nitrate, cerium acetate, cerium chloride, cerium sulfate, cerium acetylacetonate and the like. Certain species may also exist under their hydrate forms which are also suitable precursors.

The sol-gel solution may optionally further comprise bismuth oxide precursors such as bismuth salts or organometallic derivatives like metal alkoxides. Examples of such bismuth precursors are bismuth nitrate, bismuth chloride, bismuth citrate, bismuth acetate, bismuth phosphate and the like. Certain species may also exist under their hydrate forms which are also suitable precursors. Preferably, the precursor of bismuth oxide is bismuth nitrate and the precursor of cerium oxide is cerium nitrate. Combinations of such precursors can be used.

The sol-gel solution may optionally further comprise phosphorous oxide precursors such as phosphoric acid and/or a phosphite alkoxide such as triethylphosphite. Preferred is triethylphosphite.

The sol-gel solution may optionally further comprise precursors of one or several other metal oxides such as $Al_2O_3$, $Fe_2O_3$, $SnO_2$, $TaO_2$. Examples of such precursors are the corresponding nitrate or chloride salts.

The solvent or solvent mixture used can be any of those known to the skilled person for sol-gel preparation. These solvents are solvents miscible with water such as alcohols, for instance: methanol, ethanol, isopropanol, butanol, 2-ethoxy-ethanol, 1-methoxy-2-propanol; or ketones such as acetone and methylethylketone. As water-miscible solvents, ethylcellosolve, butylcellosolve, cellosolve acetate, diacetone alcohol, tetrahydrofurfuryl alcohol and mesityl oxide can also be mentioned. Mixtures of solvents can be used.

A catalyst may optionally be used, it can be chosen amongst the catalysts known to the skilled person for sol-gel preparation, such as an inorganic acid, for instance hydrochloric acid, nitric acid, sulfuric acid; or an organic acid such as acetic acid, citric acid, formic acid. Preferred are nitric acid and hydrochloric acid.

A stabilizing agent may also optionally be used, it can be chosen amongst the stabilizing agents known to the skilled person for sol-gel preparation, such as acetylacetone, ethyl acetoacetate or hydroxypropyl cellulose. Preferred is ethyl acetoacetate.

The sol-gel solution may further optionally comprise other additives such as hydrophobic or oleophobic or omniphobic substances to confer an easy maintenance property to the final coating, coloring components (e.g. inorganic pigments).

The sol-gel solution can be applied on the substrate by various methods such as bar coating, spin coating, dip coating, slot-die coating, spraying (i.e. LP pulverization, HVLP pulverization, airless pulverization or combined spraying technologies like Airmix®, DUO®, ...), ultrasonic deposition, electrospray deposition, curtain coating, roller coating, slit coating, flow coating, dipping method; or a printing method such as screen printing, gravure printing, ink jet printing and curved-face printing.

The application method is preferably electrospray deposition, ultrasonic deposition and ink jet printing, which advantageously allow obtaining a lower thickness dispersion of the sol-gel coating and densified sol-gel coating.

The sol-gel solution is applied on at least a part of the face of the substrate provided with the soft coating and above the soft coating. Both the soft coating and the sol-gel solution can cover substantially the entire face of the substrate or they can both cover the same part of the face or the soft coating can cover a part of the face and the sol-gel solution can cover a larger part or substantially the whole face of the substrate.

The sol-gel solution may be applied directly after the step of forming the soft coating on the substrate or one or several optional intermediate steps may be conducted in between.

An optional intermediate step may be for instance the application of one or more intermediate layers between the soft coating and the sol-gel coating. When no intermediate layer is applied, the sol-gel coating is in direct contact with the soft coating, i.e. no intermediate layer is present between the soft coating and the sol-gel coating on the portions of the surface where they are both present. It is preferred that the sol-gel coating is provided in direct contact with the soft coating and at least substantially on the entire soft coating. It is hence preferred that no step of applying an intermediate layer is performed.

Another optional intermediate step might be to move the substrate from a soft coating application line to a sol-gel coating application line.

The formation of the sol-gel coating also comprises the sub-step of drying the sol-gel solution to obtain the sol-gel coating.

The drying is performed at a temperature ranging from 100°C to 250°C for a certain duration. The temperature and duration conditions are adapted depending on the type of sol-gel solution applied. A typical drying is 150°C for 7 minutes. Besides the evaporation of the volatile compounds, the drying may also lead to partial or total crosslinking of the precursors depending on the temperature and the heating duration.

The obtained sol-gel coating is typically exempt of any volatile compounds. By volatile compound is meant any compound having a boiling point of at most 250°C measured at standard pressure. By exempt is meant that the residual content of such volatile compounds is close to zero. It is generally below 3 wt%, preferably below 2 wt%, more preferably below 1 wt%, most preferably below 0.5 wt% of the sol-gel coating. The wt% of volatile compounds is determined by thermogravimetric analysis (TGA) under air, from 20 to 300°C at a heating rate of 10°C/min. The wt% of volatile compounds is the weight loss measured by TGA under these conditions on a sample of sol-gel coating obtained from the sol-gel solution that has been dried under air at 150°C for 7 minutes.

The process for making a coated substrate according to the invention comprises a subsequent step of forming a protective coating comprising at least one organic polymer on at least a part of said face above the sol-gel coating.

The protective coating may be formed by any suitable manner. It may be formed for instance from a hot melt, a solution or an aqueous dispersion, comprising at least one organic polymer. It can also be formed from the crosslinking of polymer precursors.

It is preferably formed from of a solution or an aqueous dispersion comprising at least one organic polymer or from the crosslinking of polymer precursors.

The step of forming a protective coating comprises a sub-step of application that can optionally be followed by a drying and/or crosslinking sub-step.

The protective coating is formed on at least a part of the face of the substrate provided with the sol-gel coating and above the sol-gel coating. It preferably covers the entire sol-gel coating and the entire soft coating or substantially the whole face of the substrate.

The protective coating may be applied directly after the step of forming the sol-gel coating or one or several optional intermediate steps may be conducted in between.

An optional intermediate step may be for instance the application of one or more intermediate layers between the sol-gel coating and the protective coating. When no intermediate layer is applied, the protective coating is in direct contact with the sol-gel coating, i.e. no intermediate layer is present between the sol-gel coating and the protective coating on the portions of the surface where they are both present. It is preferred that the protective coating is provided in direct contact with the sol-gel coating and at least substantially on the entire sol-gel coating. It is hence preferred that no step of applying an intermediate layer is performed.

Another optional intermediate step might be to move the substrate from a sol-gel coating application line to a protective coating application line.

In a particular embodiment, the process comprises a subsequent heating step comprising the densification of the sol-gel coating forming the densified sol-gel coating and the thermal degradation of the protective coating.

By densification is meant the reduction of the thickness of the sol-gel coating by application of heat during a given duration to obtain the densified sol-gel coating. The densification temperature generally ranges from 300 °C to 800 °C in air for a period of from 2 minutes to 10 minutes. It may particularly take place between 400 °C and 710 °C.

This embodiment is hence limited to substrates that can withstand said temperature ranges without major alteration. The substrates used in this embodiment must withstand a heat treatment at at least 300°C, preferably at at least 400°C. The substrate is preferably glass, glass-ceramic, ceramic, steel, metal. It is more preferably a glass substrate.

During the heating step, the crosslinking of the precursors is finalized if not fully performed during the drying of the sol-gel solution, the thickness of the sol-gel coating is reduced by the reduction of its porosity and the protective coating is thermally degraded. The thermal degradation of the organic polymer is advantageously not detrimental to the sol-gel coating integrity and does not or not significantly impact the properties of the soft coating.

In this embodiment, the application method of the sol-gel solution is preferably electrospray deposition, ultrasonic deposition and ink jet printing, which advantageously allow obtaining a lower thickness dispersion of the final densified sol-gel coating.

In a variant of this embodiment, the substrate is glass and the heating step takes place during a heat treatment of the glass. The heat treatment of the glass may be one of those encountered in a bending (also known as curving), annealing (also known as strengthening) or tempering process. It is advantageous as more and more heat treated glass is requested in buildings and automotive applications namely for safety purposes. The heat treatment is known to the skilled person and is performed according to known methods. It generally comprises heating the glass sheet to a temperature between 300 and 800°C, in air, for example between 400°C and 710°C, for a couple of seconds to several hours. The conditions are adapted depending on the heat-treatment type, the thickness and nature of the glass sheet, the type of soft coating and sol-gel coating applied. The treatment may comprise a rapid cooling step after the heating step, to introduce stresses difference between the surface and the core of the glass so that in case of impact, the so-called tempered glass sheet will break safely in small pieces. If the cooling step is less strong, the glass will then simply be annealed and in any case offer a better mechanical resistance.

In this variant, the heating step is preferably a tempering step where a coated glass substrate is tempered.

In another aspect of the invention, there is provided a densified coated substrate obtained from the heating of the coated substrate. The densified coated substrate is preferably a densified coated glass substrate.

The densified sol-gel coating of the densified coated substrate is mainly an inorganic densified sol-gel coating. It is usually a uniform network spread out in sheet-like manner that can have open or closed pores.

The thickness of the densified sol-gel coating typically ranges from 30 to 500 nm. It is preferably at least 50 nm and preferably at most 300 nm. When the thickness is too low, the protective effect of the coating is less efficient and when the thickness is too high, the risk to create cracks into the coating during the heating step is high due to the shrinkage of the sol-gel.

Dispersion of the thickness of the densified sol-gel coating is preferably lower than +/- 20 nm, more preferably lower than +/- 10 nm whatever the thickness. It allows advantageously not to significantly impact the optical properties of the underlying soft coating such as the color or reflection.

The presence of the densified sol-gel coating of the invention above a solar control or insulating low-E coating advantageously does not significantly impact the emissivity of the solar control or insulating low-E coating. It means that the emissivity measured according to EN 12898 without and with the densified sol-gel coating differs of at most 5%, preferably of at most 3%.

In a preferred embodiment of the present invention the ratio tSG/tDp+1 of the optical thickness of the densified sol-gel coating tSG to the optical thickness of the soft coating's last dielectric layer tDp+1 in the sequence starting from the glass is comprised between 0.5 and 0.9. The optical thickness of a layer or coating is its thickness multiplied by its refractive index at a wavelength of 550nm. It was found that densified coated glass substrates that respect this optical thickness ratio reach good mechanical and chemical durabilities without significantly changing the reflected and/or transmitted colors. In particular, any of the soft coatings in any of the following WO2005012200, WO2006122900, WO2007138097, WO2011147875, WO2011147864, WO2013079400, WO2014191472, WO2014191474, WO2014191484, or soft coatings of the Sunlux or Stopsol product range commercialized by Asahi Glass Company for example Silver Smart (such as 30/51/69), Planibel AS, iplustop (such as 1.1T, 1.0T, Stopray (Vision 50, 60, 72, 61, 41, and 40 and ultra 50 and 60 )) and Energy N also commercialized by Asahi Glass Company is modified so that the ratio of optical thickness of the densified sol-gel coating to the optical thickness of the soft coating's last dielectric layer in the sequence starting from the glass is comprised between 0.5 and 0.9.

Contrarily to the disclosure of US20160194516, the present invention provides a protection of the soft coating before and after the heating step and for the lifetime of the densified coated substrate. After formation of the protective coating, both the sol-gel coating and the protective coating bring protection of the underlying soft coating. After the heating step, the protective coating has mainly burnt, but the densified sol-gel coating protects the underlying soft coating.

The presence of the densified sol-gel coating above the soft coating advantageously brings a protection of the soft coating against mechanical, chemical and corrosion attacks. In other words, the densified coated substrate comprises a soft coating having improved mechanical, chemical and corrosion resistance thanks to the presence of the densified sol-gel coating. Particularly significant improvements are observed on soft coatings comprising at least one silver comprising layer, for instance one, two or three silver comprising layers.

These improved performances allow broadening the use of substrates bearing such soft coatings to applications where they are in contact with the environment, particularly when the coated substrate is a glass substrate and particularly when the soft coating is a solar control or insulating low-E coating produced by the PVD method.

The densified coated substrate of the invention has a particular interest in the field of glazing units. It is therefore another object of the present invention to provide glazing units comprising at least one densified coated glass substrate of the invention, wherein a face of the densified coated glass substrate provided with the soft coating and the densified sol-gel coating is facing the outside of the unit.

They may for instance be used in simple glazing, or in multiple glazing in external position, i.e. on the external faces of the glazing, those facing the environment, particularly the environment of the inside of a building

The glazing unit may be a single glazing unit, i.e. a glazing unit comprising a single glass panel. In this case, the glass panel is a densified coated glass substrate according to the invention or a laminated glass comprising such densified coated glass substrate. In both cases, a face of the densified coated glass substrate provided with the soft coating and the densified sol-gel coating is facing the outside of the unit.

The glazing unit may be a multiple glazing unit. It is meant by multiple glazing unit a glazing unit comprising at least two glass panels separated by an interspace. It may for instance be a double glazing or a triple glazing. The interspace may be filled in with an insulating gas or the multiple glazing may be a vacuum insulating glazing. The glass panels of said multiple glazing units may be glass sheets or laminated glass or a combination of these. At least one glass panel of the multiple glazing is a densified coated glass substrate according to the invention or a laminated glass comprising such densified coated glass substrate. In both cases, a face of the densified coated glass substrate provided with the soft coating and the sol-gel coating is facing the outside of the unit.

The glazing units of the invention may be used for saving energy in applications such as buildings, transportation (automobile, bus, boat, train, tramway and the like) or greenhouses.

The person skilled in the art realizes that the present invention by no means is limited to the preferred embodiments described above. On the contrary, many modifications and variations are possible within the scope of the appended claims. It is further noted that the invention relates to all possible combinations of features, and preferred features, described herein and recited in the claims.

Embodiments of the invention will now be further described by way of examples that are provided for illustrative purposes, and are not intended to limit the scope of this invention.

Preparation of Example 1

A solution A is prepared by mixing at room temperature A1g of ethyl alcohol, A2 g of acetylacetonate and A3g of titanium(IV) butoxide. A solution B is prepared by mixing at room temperature B1g of ethyl alcohol, B2g of acetylacetone and B3 g of zirconium propoxide. A solution C is prepared by adding dropwise solution A in solution B at room temperature under stirring in 2 hours. A solution D is prepared by mixing D1 g of ethyl alcohol and D2 g of (3-glycidyloxypropyl)trimethoxysilane. $D_3$ g of a solution of hydrochloric acid 0.1M is added to the solution D. D4 g of demineralized water is added to the solution D. Solution D is stirred at room temperature during 2 hours. Solution E is obtained by adding dropwise in 1 hour solution D to the solution C at room temperature under stirring .

2 mL of the final solution are spin coated on a clean low-E coated glass substrate (Planibel AS 4 mm and Vision 40T 6 mm commercialized by Asahi Glass Company).

The drying conditions are: 150°C for 7 minutes under air. A polymeric dispersion is obtained by diluting 50g of Daotan® TW7000/40WA in 50 g of ethyl alcohol. Dispersion is stirred for 1 hour.

2 mL of the polymeric dispersion is spin coated on the dried substrate described here above.

The drying conditions are: 150°C for 7 minutes under air.

Table 1: amounts (g) of species of example 1

|  | A1 | A2 | A3 | B1 | B2 | B3 | D1 | D2 | D3 | D4 |
|---|---|---|---|---|---|---|---|---|---|---|
| Example 1 | 6,91 | 8,01 | 13,61 | 30,11 | 2 | 3,28 | 4,2 | 5 | 2,58 | 2,16 |

Preparation of comparative Example 1

Example 1 is repeated, but the application of a polymeric dispersion on top of the sol-gel coating after drying is omitted.

Properties evaluation

The properties are evaluated according to the following methods:
The coatings prepared in example 1 and in the comparative example were subjected to an abrasion test performed with an Elcometer 1720 Abrasion and Washability Tester. This test is performed before densification. The test consisted in scrubbing the coated glass for 500 or 1000 cycles with a nylon bristle brush as described in ASTM D2486 standard. The surface is examined in reflection under lighting. If the appearance of the abraded area is distinguishable, the sample is considered as "ko" meaning not having good mechanical resistance. If there is no difference between the abraded area and the non-abraded area, the coating is considered as "ok" meaning having good mechanical resistance according to the invention. The test results are summarized in

Table 2: evaluation of abrasion resistance of the samples of Example 1 and Comparative example 1 after n rubbing cycles

| Samples | 500 cycles | 1000 cycles |
|---|---|---|
| Ex.1 | ok | ok |
| Comp. Ex 1 | ok | ko |

After performing the test, the sample of Example 1 has been densified during 5 minutes at 670° under air. The visual observation of the sample after densification shows the removal of the protective coating and the absence of any deterioration of the densified sol-gel coating.

Preparation of Example 2 : preparation of a Ce02 doped Si02 TiO$_2$ ZrO2 sol-gel solution according the invention

A solution A is prepared by mixing A1 g of ethyl alcohol, A2 g of acetylacetonate and A3 g of Titanium (IV) butoxide. Solution A is stirred at room temperature during 10 minutes. A solution B is prepared by mixing B1g of ethyl alcohol, B2g of acetylacetone, B3 g of Zirconium propoxide and B4g of Cerium (III) nitrate hexahydrated. Solution B is stirred at room temperature during 10 minutes. A solution C is prepared by pouring solution A in solution B at room temperature under stirring. Pouring of A in B must be performed drop by drop in such a manner that the addition time takes 2 hours. A solution D is prepared by mixing D1 g of ethyl alcohol, D2 g of acetylacetonate, D3 g of tetraethylorthosilicate. D4 g of a solution of hydrochloric acid 0.1M is added to the solution D. D$_5$ g of demineralized water is added to the solution D Solution D is stirred at room temperature during 2 hours. The final solution is obtained by pouring solution D in solution C at room temperature under stirring. Pouring of D in C must be performed drop by drop in such a manner that the addition time takes 1 hour.

2 ml of the sol-gel are spin coated on standard soda lime glass. The glass is then dried at 160°C for 12 minutes and densification is performed under air for 3,5 min at 670°C.

The weight percent ratio CeO$_2$/SiO$_2$ is 0.011.

Table 3 : amounts (g) of species of example 2

|  | A1 | A2 | A3 | B1 | B2 | B3 | B4 | D1 | D2 | D3 | D4 | D5 |
|---|---|---|---|---|---|---|---|---|---|---|---|---|
| Example 2 | 6,91 | 8,01 | 13,61 | 3,28 | 2 | 30,11 | 0,056 | 4,2 | 0 | 5 | 2,58 | 2,16 |

Comparative examples 2 and 3 : preparation of Si02 Ti02 Zr02 Ce02 sol gel solutions

A solution A is prepared by mixing A1 g of ethyl alcohol, A2 g of acetylacetonate and A$_3$ g of Titanium (IV) butoxide. Solution A is stirred at room temperature during 10 minutes. A solution B is prepared by mixing B1g of ethyl alcohol, B2g of acetylacetone, B3 g of Zirconium propoxide and B4g of Cerium (III) nitrate hexahydrated. Solution B is stirred at room temperature during 10 minutes. A solution C is prepared by pouring solution A in solution B at room temperature under stirring. Pouring of A in B must be performed drop by drop in such a manner that the addition time takes 2 hours. A solution D is prepared by mixing D1 g of ethyl alcohol, D2 g of acetylacetonate, D$_3$ g of tetraethylortho-silicate. D4 g of a solution of hydrochloric acid 0.1M is added to the solution D. D5 g of demineralized water is added to the solution D Solution D is stirred at room temperature during 2 hours. The final solution is obtained by pouring solution D in solution C at room temperature under stirring. Pouring of D in C must be performed drop by drop in such a manner that the addition time takes 1 hour.

2 ml of the sol-gel are spin coated on standard soda lime glass. The glass is then dried at 160°C for 12 minutes and densification is performed under air for 3,5 min at 670°C.

The weight percent ratio CeO$_2$/SiO$_2$ is 0.40 for Comparative example 2 and 2.3 for Comparative example 3.

Table 4 : amounts (g) of species of Comparative examples 2 and 3

|  | A1 | A2 | A3 | B1 | B2 | B3 | B4 | D1 | D2 | D3 | D4 | D5 |
|---|---|---|---|---|---|---|---|---|---|---|---|---|
| Comparative example 2 | 6,91 | 8,01 | 13,61 | 3,28 | 2 | 30,11 | 2 | 4,2 | 0 | 5 | 2,58 | 2,16 |
| Comparative example 3 | 6,91 | 8,01 | 13,61 | 3,28 | 2 | 30,11 | 11,62 | 4,2 | 0 | 5 | 2,58 | 2,16 |

Tint measurement:

The tint of a reference sample (standard soda lime glass), samples after drying of Example 2 and Comparative examples 2 and 3 are defined by CIELAB 1976 values (L*a*b*). They are measured with illuminant D65/10°. The results are reported in Table

Table 5: Tint values

| Samples | L* | a* | b* |
|---|---|---|---|
| Standard soda lime glass | 96,02 | -0,71 | 0,23 |
| Ex. 2 | 94,38 | 0,86 | 1,29 |
| Comp. ex. 2 | 95,07 | -0,46 | 2,53 |
| Comp. ex.3 | 94,20 | -2,36 | 6,64 |

An increase in the b* value corresponds to a yellowing. It is apparent from Table 5 that the sol-gel coating of Example 2 according to the invention has a low yellowing effect in comparison to compositions having higher cerium oxide contents like those of Comparative examples 2 and 3.

**Claims**

1. A coated substrate comprising:

   • a substrate,
   • a soft coating comprising one or more layers deposited by physical vapor deposition provided on at least a part of at least one face of the substrate,
   • a sol-gel coating provided on at least a part of said face above the soft coating comprising:

      - silicon oxide
      - at least one of titanium oxide or zirconium oxide,
      - cerium oxide in a theoretical weight ratio of cerium oxide/silicon oxide ranging from 0 to 0.03

   • a protective coating comprising at least one organic polymer provided on at least a part of said face above the sol-gel coating.

2. Coated substrate according to claim 1, wherein the sum of the theoretical weight ratios of titanium oxide/silicon oxide and zirconium oxide/silicon oxide in the sol-gel coating ranges from 0.01 to 6.

3. Coated substrate according to any of claims 1 or 2, wherein the sol-gel coating comprises silicon oxide, titanium oxide, zirconium oxide, cerium oxide in theoretical weight ratios of:

   - titanium oxide / silicon oxide ranging from 0.01 to 3,
   - zirconium oxide /silicon oxide ranging from 0.01 to 3,
   - cerium oxide/silicon oxide ranging from 0 to 0.03.

4. Coated substrate according to any of the preceding claims, wherein the organic polymer is a polymer having a weight average molecular weight of at least 200 Daltons and a Tg of at least 25°C.

5. Coated substrate according to any of the preceding claims, wherein the substrate is a glass substrate.

6. Coated substrate according to any of the preceding claims, wherein the soft coating is a solar control or insulating low-E coating.

7. Coated substrate according to any of the preceding claims, wherein the sol-gel coating is provided on at least a part of the face of the substrate provided with the soft coating and in direct contact with the soft coating.

8. Coated substrate according to any of the preceding claims, wherein the sol-gel coating is provided at least substantially on the entire soft coating and in direct contact with the soft coating.

9. Coated substrate according to any of the preceding claims, wherein the protective coating is provided on at least a part of the face of the substrate provided with the soft coating and the sol-gel coating and in direct contact with the sol-gel coating.

10. Coated substrate according to any of the preceding claims, wherein the protective coating is provided at least substantially on the entire sol-gel coating and in direct contact with the sol-gel coating.

11. Process for making a coated substrate according to any of claims 1 to 10 comprising the steps of:

 a) forming a soft coating comprising one or more layers deposited by physical vapor deposition on at least a part of at least one face of the substrate,
 b) forming a sol-gel coating on at least a part of said face above the soft coating,
 c) forming a protective coating comprising at least one organic polymer on at least a part of said face above the sol-gel coating.

12. Process according to the preceding claim, wherein the step of forming a sol-gel coating comprises the sub-steps of preparing, applying and drying a sol-gel solution wherein the sol-gel solution is applied by a method selected from electrospray deposition, ultrasonic deposition and ink jet printing.

13. Process according to any of claims 11 or 12, comprising a subsequent heating step comprising the densification of the sol-gel coating forming the densified sol-gel coating and the thermal degradation of the protective coating.

14. Process according to the preceding claim, wherein the substrate is a glass substrate.

15. Process according to the preceding claim, wherein the heating step is a tempering step.

16. Densified coated glass substrate obtained by the process according to any of claims 14 or 15.

17. Densified coated glass substrate according to the preceding claim, wherein the ratio tSG/tDp+1 of the optical thickness of the densified sol-gel coating tSG to the optical thickness of the soft coating's last dielectric layer tDp+1 in the sequence starting from the glass is comprised between 0.5 and 0.9.

18. Glazing unit comprising at least one densified coated glass substrate according to any of claim 16 or 17, wherein a face of the densified coated substrate provided with the soft coating and the densified sol-gel coating is facing the outside of the unit.

19. Glazing unit according to claim 18, wherein the glazing unit is a single glazing unit comprising one glass panel.

20. Glazing unit according to claim 18, wherein the glazing unit is a multiple glazing unit comprising at least two glass panels separated by an interspace.

**Patentansprüche**

1. Beschichtetes Substrat, umfassend:

 • ein Substrat,
 • eine weiche Beschichtung, umfassend eine oder mehrere durch physikalische Gasphasenabscheidung abgeschiedene Schichten, bereitgestellt auf mindestens einem Teil von mindestens einer Fläche des Substrats,
 • eine Sol-Gel-Beschichtung, bereitgestellt auf mindestens einem Teil der Fläche über der weichen Beschichtung, umfassend:

   - Siliciumoxid
   - mindestens eines von Titanoxid oder Zirconiumoxid,
   - Ceroxid in einem theoretischen Gewichtsverhältnis von Ceroxid/Siliciumoxid im Bereich von 0 bis 0,03

 • eine schützende Beschichtung, umfassend mindestens ein organisches Polymer, bereitgestellt auf mindestens einem Teil der Fläche über der Sol-Gel-Beschichtung.

2. Beschichtetes Substrat nach Anspruch 1, wobei die Summe der theoretischen Gewichtsverhältnisse von Titanoxid/Siliciumoxid und Zirconiumoxid/Siliciumoxid in der Sol-Gel-Beschichtung im Bereich von 0,01 bis 6 liegt.

**3.** Beschichtetes Substrat nach einem der Ansprüche 1 oder 2, wobei die Sol-Gel-Beschichtung Siliciumoxid, Titanoxid, Zirconiumoxid, Ceroxid in theoretischen Gewichtsverhältnissen wie folgt umfasst:

- Titanoxid/Siliciumoxid im Bereich von 0,01 bis 3,
- Zirconiumoxid/Siliciumoxid im Bereich von 0,01 bis 3,
- Ceroxid/Siliciumoxid im Bereich von 0 bis 0,03.

**4.** Beschichtetes Substrat nach einem der vorhergehenden Ansprüche, wobei das organische Polymer ein Polymer mit einem durchschnittlichen Molekulargewicht (Gewichtsmittel) von mindestens 200 Dalton und einer Tg von mindestens 25 °C ist.

**5.** Beschichtetes Substrat nach einem der vorhergehenden Ansprüche, wobei das Substrat ein Glassubstrat ist.

**6.** Beschichtetes Substrat nach einem der vorhergehenden Ansprüche, wobei die weiche Beschichtung eine Solarsteuerungsbeschichtung oder isolierende Low-E-Beschichtung ist.

**7.** Beschichtetes Substrat nach einem der vorhergehenden Ansprüche, wobei die Sol-Gel-Beschichtung auf mindestens einem Teil der Fläche des Substrats, der mit der weichen Beschichtung ausgestattet ist, und in direktem Kontakt mit der weichen Beschichtung bereitgestellt wird.

**8.** Beschichtetes Substrat nach einem der vorhergehenden Ansprüche, wobei die Sol-Gel-Beschichtung mindestens im Wesentlichen auf der gesamten weichen Beschichtung und in direktem Kontakt mit der weichen Beschichtung bereitgestellt wird.

**9.** Beschichtetes Substrat nach einem der vorhergehenden Ansprüche, wobei die schützende Beschichtung auf mindestens einem Teil der Fläche des Substrats, der mit der weichen Beschichtung und der Sol-Gel-Beschichtung ausgestattet ist, und in direktem Kontakt mit der Sol-Gel-Beschichtung bereitgestellt wird.

**10.** Beschichtetes Substrat nach einem der vorhergehenden Ansprüche, wobei die schützende Beschichtung mindestens im Wesentlichen auf der gesamten Sol-Gel-Beschichtung und in direktem Kontakt mit der Sol-Gel-Beschichtung bereitgestellt wird.

**11.** Verfahren zur Fertigung eines beschichteten Substrats nach einem der Ansprüche 1 bis 10, umfassend die Schritte:

a) Bilden einer weichen Beschichtung, umfassend eine oder mehrere durch physikalische Gasphasenabscheidung abgeschiedene Schichten, auf mindestens einem Teil von mindestens einer Fläche des Substrats,
b) Bilden einer Sol-Gel-Beschichtung auf mindestens einem Teil der Fläche über der weichen Beschichtung,
c) Bilden einer schützenden Beschichtung, umfassend mindestens ein organisches Polymer, auf mindestens einem Teil der Fläche über der Sol-Gel-Beschichtung.

**12.** Verfahren nach dem vorhergehenden Anspruch, wobei der Schritt des Bildens einer Sol-Gel-Beschichtung die Teilschritte des Zubereitens, Aufbringens und Trocknens einer Sol-Gel-Lösung umfasst, wobei die Sol-Gel-Lösung nach einem Verfahren ausgewählt aus Elektrosprayabscheidung, Ultraschallabscheidung und Tintenstrahldruck aufgebracht wird.

**13.** Verfahren nach einem der Ansprüche 11 oder 12, umfassend einen nachfolgenden Heizschritt, umfassend die Verdichtung der Sol-Gel-Beschichtung, wodurch die verdichtete Sol-Gel-Beschichtung gebildet wird, und die thermische Alterung der schützenden Beschichtung.

**14.** Verfahren nach dem vorhergehenden Anspruch, wobei das Substrat ein Glassubstrat ist.

**15.** Verfahren nach dem vorhergehenden Anspruch, wobei der Heizschritt ein Temperschritt ist.

**16.** Verdichtetes beschichtetes Glassubstrat, das nach dem Verfahren gemäß einem der Ansprüche 14 oder 15 erhalten wird.

**17.** Verdichtetes beschichtetes Glassubstrat nach dem vorhergehenden Anspruch, wobei das Verhältnis $tSG/tD_{p+1}$ der optischen Dicke der verdichteten Sol-Gel-Beschichtung, $tSG$, zu der optischen Dicke der letzten dielektrischen Schicht der weichen Beschichtung, tD$_{p+1}$, in der Abfolge ausgehend von dem Glas zwischen 0,5 und 0,9 liegt.

**18.** Verglasungseinheit, umfassend mindestens ein verdichtetes beschichtetes Glassubstrat nach einem von Anspruch 16 oder 17, wobei eine Fläche des verdichteten beschichteten Substrats, die mit der weichen Beschichtung und der verdichteten Sol-Gel-Beschichtung ausgestattet ist, zu der Außenseite der Einheit weist.

**19.** Verglasungseinheit nach Anspruch 18, wobei die Verglasungseinheit eine Einzelverglasungseinheit ist, die eine Glasplatte umfasst.

**20.** Verglasungseinheit nach Anspruch 18, wobei die Verglasungseinheit eine Mehrfachverglasungseinheit ist, die mindestens zwei Glasplatten umfasst, die durch einen Zwischenraum getrennt sind.

## Revendications

**1.** Substrat revêtu comprenant :

• un substrat,
• un revêtement souple comprenant une ou plusieurs couches déposées par dépôt physique en phase vapeur appliqué sur au moins une partie d'au moins une face du substrat,
• un revêtement sol-gel appliqué sur au moins une partie de ladite face au-dessus du revêtement souple comprenant :

- de l'oxyde de silicium
- au moins l'un parmi de l'oxyde de titane et de l'oxyde de zirconium,
- de l'oxyde de cérium en un rapport en poids théorique d'oxyde de cérium/oxyde de silicium dans la plage de 0 à 0,03

• un revêtement protecteur comprenant au moins un polymère organique appliqué sur au moins une partie de ladite face au-dessus du revêtement sol-gel.

**2.** Substrat revêtu selon la revendication 1, la somme des rapports en poids théoriques d'oxyde de titane/oxyde de silicium et d'oxyde de zirconium/oxyde de silicium dans le revêtement sol-gel se situant dans la plage de 0,01 à 6.

**3.** Substrat revêtu selon l'une quelconque des revendications 1 et 2, le revêtement sol-gel comprenant de l'oxyde de silicium, de l'oxyde de titane, de l'oxyde de zirconium, de l'oxyde de cérium en des rapports en poids théoriques de :

- oxyde de titane/oxyde de silicium dans la plage de 0,01 à 3,
- oxyde de zirconium/oxyde de silicium dans la plage de 0,01 à 3,
- oxyde de cérium/oxyde de silicium dans la plage de 0 à 0,03.

**4.** Substrat revêtu selon l'une quelconque des revendications précédentes, le polymère organique étant un polymère possédant un poids moléculaire moyen en poids d'au moins 200 Daltons et une Tg d'au moins 25 °C.

**5.** Substrat revêtu selon l'une quelconque des revendications précédentes, le substrat étant un substrat de verre.

**6.** Substrat revêtu selon l'une quelconque des revendications précédentes, le revêtement souple étant un revêtement de contrôle solaire ou un revêtement isolant à faible émissivité.

**7.** Substrat revêtu selon l'une quelconque des revendications précédentes, le revêtement sol-gel étant appliqué sur au moins une partie de la face du substrat pourvue du revêtement souple et en contact direct avec le revêtement souple.

**8.** Substrat revêtu selon l'une quelconque des revendications précédentes, le revêtement sol-gel étant appliqué au moins sensiblement sur le revêtement souple entier et en contact direct avec le revêtement souple.

**9.** Substrat revêtu selon l'une quelconque des revendications précédentes, le revêtement protecteur étant appliqué sur au moins une partie de la face du substrat pourvue du revêtement souple et du revêtement sol-gel et en contact direct avec le revêtement sol-gel.

10. Substrat revêtu selon l'une quelconque des revendications précédentes, le revêtement protecteur étant appliqué au moins sensiblement sur le revêtement sol-gel entier et en contact direct avec le revêtement sol-gel.

11. Procédé pour la préparation d'un substrat revêtu selon l'une quelconque des revendications 1 à 10 comprenant les étapes de :

a) formation d'un revêtement souple comprenant une ou plusieurs couches déposées par dépôt physique en phase vapeur sur au moins une partie d'au moins une face du substrat,
b) formation d'un revêtement sol-gel sur au moins une partie de ladite face au-dessus du revêtement souple,
c) formation d'un revêtement protecteur comprenant au moins un polymère organique sur au moins une partie de ladite face au-dessus du revêtement sol-gel.

12. Procédé selon la revendication précédente, l'étape de formation d'un revêtement sol-gel comprenant les sous-étapes de préparation, d'application et de séchage d'une solution sol-gel, la solution sol-gel étant appliquée par un procédé choisi parmi un dépôt par électropulvérisation, un dépôt ultrasonique et une impression par jet d'encre.

13. Procédé selon l'une quelconque des revendications 11 et 12, comprenant une étape de chauffage subséquente comprenant la densification du revêtement sol-gel formant le revêtement sol-gel densifié et la dégradation thermique du revêtement protecteur.

14. Procédé selon la revendication précédente, le substrat étant un substrat de verre.

15. Procédé selon la revendication précédente, l'étape de chauffage étant une étape de recuit.

16. Substrat de verre revêtu densifié obtenu par le procédé selon l'une quelconque des revendications 14 et 15.

17. Substrat de verre revêtu densifié selon la revendication précédente, le rapport tSG/tDp+1 de l'épaisseur optique du revêtement sol-gel densifié tSG sur l'épaisseur optique de la dernière couche diélectrique du revêtement souple tDp+1 dans la séquence partant du verre étant compris entre 0,5 et 0,9.

18. Unité de vitrage comprenant au moins un substrat de verre revêtu densifié selon l'une quelconque des revendications 16 et 17, une face du substrat revêtu densifié pourvue du revêtement souple et du revêtement sol-gel densifié faisant face à l'extérieur de l'unité.

19. Unité de vitrage selon la revendication 18, l'unité de vitrage étant une unité de vitrage unique comprenant un panneau de verre.

20. Unité de vitrage selon la revendication 18, l'unité de vitrage étant une unité de vitrage multiple comprenant au moins deux panneaux de verre séparés par un espace intermédiaire.

**REFERENCES CITED IN THE DESCRIPTION**

**Patent documents cited in the description**

- US 20070243391 A
- EP 2404882 A1
- US 2008268260 A1
- WO 2017072259 A1
- US 20160194516 A
- WO 2005012200 A
- WO 2006122900 A
- WO 2007138097 A
- WO 2011147875 A
- WO 2011147864 A
- WO 2013079400 A
- WO 2014191472 A
- WO 2014191474 A
- WO 2014191484 A